(19) Europäisches Patentamt
European Patent Office
Office européen des brevets

(11) **EP 4 349 876 A1**

(12) **EUROPEAN PATENT APPLICATION**
published in accordance with Art. 153(4) EPC

(43) Date of publication:
**10.04.2024 Bulletin 2024/15**

(21) Application number: **22849733.5**

(22) Date of filing: **30.06.2022**

(51) International Patent Classification (IPC):
***C08F 212/08*** *(2006.01)* ***C08F 220/30*** *(2006.01)*
***C08F 220/44*** *(2006.01)* ***C08L 25/12*** *(2006.01)*
***C08L 55/02*** *(2006.01)*

(52) Cooperative Patent Classification (CPC):
**C08F 212/08; C08F 220/30; C08F 220/44; C08L 25/12; C08L 55/02**

(86) International application number:
**PCT/KR2022/009387**

(87) International publication number:
**WO 2023/008754 (02.02.2023 Gazette 2023/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.07.2021 KR 20210098134**
**29.06.2022 KR 20220079972**

(71) Applicant: **LG Chem, Ltd.**
**Seoul 07336 (KR)**

(72) Inventors:
- **KANG, Soonhee**
  **Daejeon 34122 (KR)**
- **JUNG, Seonjung**
  **Daejeon 34122 (KR)**
- **BAEK, Leehyeon**
  **Daejeon 34122 (KR)**
- **CHOI, Hyungsam**
  **Daejeon 34122 (KR)**
- **HUR, Yoon Hyung**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) ANTIBACTERIAL SAN RESIN, PREPARATION METHOD THEREFOR, AND ANTIBACTERIAL ABS RESIN COMPOSITION CONTAINING SAME

(57) Provided are an antibacterial SAN resin, a method of preparing the same, and an antibacterial ABS resin composition including the same, particularly, an antibacterial SAN resin capable of exhibiting a persistent antibacterial property without leakage of antibacterial substances, a method of preparing the same, and an antibacterial ABS resin composition including the same.

【FIG. 1】

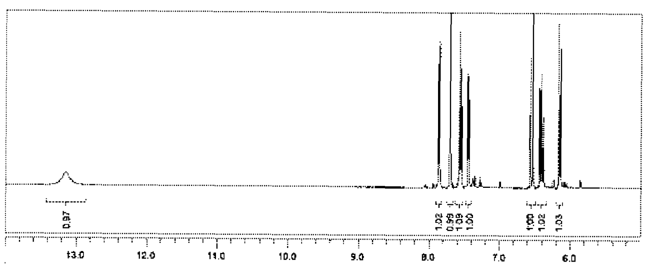


EP 4 349 876 A1

Processed by Luminess, 75001 PARIS (FR)

## Description

[Technical Field]

Cross-reference to Related Application

The present application is based on, and claims priority from, Korean Patent Application Nos. 10-2021-0098134, and 10-2022-0079972, filed on July 26, 2021, and June 29, 2022, respectively, the disclosures of which are hereby incorporated by reference herein in their entirety.

The present invention relates to an antibacterial SAN resin exhibiting a persistent antibacterial property, a method of preparing the same, and an antibacterial ABS resin composition including the same.

[Background Art]

Styrene-Acrylonitrile Resin (SAN resin) collectively refers to a copolymer including a repeating unit derived from a styrene-based monomer and a repeating unit derived from an acrylonitrile-based monomer. Since such a SAN resin has excellent fluidity and excellent heat resistance, chemical resistance and mechanical strength, it is widely used for electrical and electronic products, home appliances, office supplies, automobile parts, medical machines, etc.

In particular, the SAN resin is mixed with an ABS resin (acrylonitrile butadiene styrene resin), which may be manufactured into items mainly used in daily life, such as automobile interior/exterior materials, home appliances such as refrigerators and vacuum cleaners, toys, etc., and therefore, there is a great demand for its antibacterial property.

For this reason, attempts have been made to introduce various bacterial growth-inhibitory components, deodorants, or antibacterial agents into SAN resins, etc. Specifically, there are organic and inorganic antibacterial agents as antibacterial agents. Organic antibacterial agents are economical because they are relatively inexpensive, and exhibit excellent immediate antibacterial action, but have disadvantages of low antibacterial durability, human stability, and thermal stability. Further, inorganic antibacterial agents have problems in that they have a high unit price and a low immediate antibacterial action, and are oxidized to cause discoloration of articles when exposed to air, light, moisture, etc., and rapidly reduce physical properties of compositions during injection.

Accordingly, there is a continuous demand for the development of a SAN resin-related technology capable of remarkably inhibiting bacterial growth without deteriorating basic physical properties of SAN resins, when antibacterial agents inhibiting bacterial growth are introduced into the SAN resins.

[Disclosure]

[Technical Problem]

Accordingly, there are provided an antibacterial SAN resin capable of exhibiting a persistent antibacterial property without being harmful due to no leakage of antibacterial substances, a method of preparing the same, and an antibacterial ABS resin composition including the same.

[Technical Solution]

According to one embodiment of the present invention,
there is provided an antibacterial SAN resin including a repeating unit derived from a monomer represented by the following Chemical Formula 1; a repeating unit derived from a styrene-based monomer; and a repeating unit derived from an acrylonitrile-based monomer:

[Chemical Formula 1]

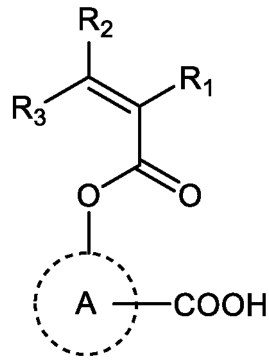

in Chemical Formula 1,

$R_1$ to $R_3$ are each independently hydrogen, or alkyl having 1 to 4 carbon atoms, and
A is an aromatic ring having 6 to 60 carbon atoms which is unsubstituted or substituted with one or more substituents selected from alkyl having 1 to 10 carbon atoms, alkoxy having 1 to 10 carbon atoms, deuterium, halogen, a hydroxy group, and a carboxyl group.

According to another embodiment of the present invention,
there is provided a method of preparing an antibacterial SAN resin, the method including the step of polymerizing a monomer represented by the following Chemical Formula 1; a styrene-based monomer; and an acrylonitrile-based monomer in the presence of a polymerization initiator at a temperature of 60°C to 90°C for 3 hours to 8 hours.

Furthermore, according to still another embodiment of the present invention, there is provided an antibacterial ABS resin composition including the above-described antibacterial SAN resin and an ABS resin.

[Effect of the Invention]

An antibacterial SAN resin of the present invention may exhibit a persistent antibacterial property of inhibiting bacterial growth without leakage of antibacterial agents.

Specifically, as the antibacterial SAN resin is prepared by copolymerizing a polymerizable antibacterial monomer having a specific structure with a styrene-based monomer and an acrylonitrile-based monomer, rather than being mixed separately, it may continuously exhibit an excellent antibacterial property against at least one of Gram-positive bacteria and Gram-negative bacteria without being harmful due to no leakage of antibacterial substances over time.

Accordingly, the antibacterial SAN resin is mixed with an ABS resin to be preferably applied to a variety of industrial products and daily products requiring durability and thermal stability.

[Brief Description of Drawings]

FIG. 1 shows $^1H$ NMR spectrum of a polymerizable antibacterial monomer 1-1 which is prepared in Preparation Example 1.

[Best Mode for Carrying Out the Invention]

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components or combinations thereof beforehand.

Further, in the present invention, when a layer or an element is mentioned to be formed "on" or "above" layers or elements, it means that each layer or element is directly formed on the layers or elements, or other layers or elements may be formed between the layers, subjects, or substrates.

The present invention may be variously modified and have various forms, and specific exemplary embodiments are exemplified and explained in detail in the following description. However, it is not intended to limit the present invention to the specific exemplary embodiments and it must be understood that the present invention includes every modifications, equivalents, or replacements included in the spirit and technical scope of the present invention.

Further, the terms used in this description are just for explaining exemplary embodiments and it is not intended to restrict the present invention. The singular expression used herein may include the plural expression unless it is differently expressed contextually.

Meanwhile, as used herein, the term "(meth)acrylate" includes both acrylate and methacrylate.

In addition, in the present specification, the alkyl group may be straight or branched, and its number of carbon atoms is not particularly limited, but preferably 1 to 10. According to one embodiment, the number of carbon atoms of the alkyl group is 1 to 6. Specific examples of the alkyl group may include methyl, ethyl, propyl, n-propyl, isopropyl, butyl, n-butyl, isobutyl, tert-butyl, sec-butyl, 1-methyl-butyl, 1-ethylbutyl, pentyl, n-pentyl, isopentyl, neopentyl, tert-pentyl, 1-ethyl-propyl, 1,1-dimethylpropyl, hexyl, n-hexyl, 1-methylpentyl, 2-methylpentyl, 4-methyl-2-pentyl, 3,3-dimethylbutyl, 2-ethylbutyl, heptyl, n-heptyl, isohexyl, 1-methylhexyl, 2-methylhexyl, 3-methylhexyl, 4-methylhexyl, 5-methylhexyl, cyclopentylmethyl, cyclohexylmethyl, octyl, n-octyl, tert-octyl, 1-methylheptyl, 2-ethylhexyl, 2,4,4-trimethyl-1-pentyl, 2,4,4-trimethyl-2-pentyl, 2-propylpentyl, n-nonyl, 2,2-dimethylheptyl, etc., but are not limited thereto.

Further, in the present specification, the alkoxy group may be straight or branched, and its number of carbon atoms is not particularly limited, but preferably 1 to 10. According to one embodiment, the number of carbon atoms of the alkoxy group is 1 to 6. Specific examples of the alkoxy group may include methoxy, ethoxy, n-propoxy, isopropoxy, n-butoxy, etc., but are not limited thereto.

In order to secure antibacterial and deodorizing properties in existing plastics such as SAN resins, a metal compound having an antibacterial function or an organic compound containing a cation or alcohol functional group was introduced in the form of an additive. However, in this case, there have been problems such as a decrease in safety of the SAN resin, persistency of antibacterial property, leakage of antibacterial substance, etc.

For example, an attempt has been made to mix the plastic resins with antibacterial agent components containing antibacterial metal ions such as silver, copper, zinc, etc. These components containing antibacterial metal ions may exhibit antibacterial property by destroying cell walls of microorganisms such as bacteria, etc., but are classified as biocide substances that are also able to kill microorganisms beneficial to the human body. In addition, when the antibacterial agent components are mixed after manufacturing the plastic resins, there has been a problem in that the antibacterial agent is leached from the final product over time, and thus the antibacterial property do not persist. Moreover, since the leached antibacterial agent adversely affects the human body, there is also a disadvantage in that health safety of the plastic resins exhibiting antibacterial property, manufactured as described above, is reduced.

Further, there are more than 5,000 species of bacteria that have been identified. Specifically, bacteria have diverse cell morphologies such as spheres, rods, spirals, etc., and their demand for oxygen is also different from each other, and thus they are divided into aerobic bacteria, facultative bacteria, and anaerobic bacteria. Therefore, it is usually not easy for one type of antibacterial agent to have physical/chemical mechanisms whereby cell membranes/cell walls of various bacteria are damaged or proteins thereof are denatured.

However, it was found that when an SAN resin is prepared by polymerizing a monomer containing a carboxyl group and having a specific structure with a styrene-based monomer and an acrylonitrile-based monomer, it may exhibit excellent antibacterial property against at least one of Gram-positive bacteria and Gram-negative bacteria while having excellent safety to the human body due to no leakage of antibacterial substances, and maintaining the antibacterial effect, thereby completing the present invention.

More specifically, when the polymerizable antibacterial monomer represented by Chemical Formula 1 comes in contact with bacteria, an acidic condition is formed by dissociation of the carboxyl group (COOH) substituted on the A ring. Under these acidic conditions, the structure and function of the cell membrane of bacteria may be affected, and thus the bacterial growth may be inhibited. Therefore, the SAN resin including the copolymer formed by the polymerizable antibacterial monomer represented by Chemical Formula 1 may exhibit antibacterial property against at least one of Gram-positive bacteria and Gram-negative bacteria.

Hereinafter, an SAN resin, a method of preparing the same, and an ABS resin composition including the same according to specific embodiments of the present invention will be described in more detail.

**SAN resin**

An SAN resin according to one embodiment is characterized by including a repeating unit derived from a monomer represented by the following Chemical Formula 1; a repeating unit derived from a styrene-based monomer; and a repeating unit derived from an acrylonitrile-based monomer:

[Chemical Formula 1]

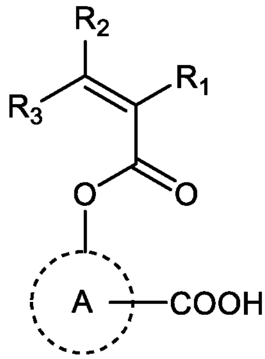

in Chemical Formula 1,

$R_1$ to $R_3$ are each independently hydrogen, or alkyl having 1 to 4 carbon atoms, and
A is an aromatic ring having 6 to 60 carbon atoms which is unsubstituted or substituted with one or more substituents, for example, 1 to 5 substituents selected from alkyl having 1 to 10 carbon atoms, alkoxy having 1 to 10 carbon atoms, deuterium, halogen, a hydroxy group, and a carboxyl group.

More specifically, the SAN resin is a copolymer prepared by copolymerization of the monomer represented by Chemical Formula 1, the styrene-based monomer, and the acrylonitrile-based monomer, and has a one-dimensional linear polymer form having a structure, in which the repeating units are arranged in long chains. In addition, the SAN resin may be an alternating copolymer in which the repeating unit derived from the monomer represented by Chemical Formula 1, the repeating unit derived from the styrene-based monomer, and the repeating unit derived from the acrylonitrile-based monomer are regularly arranged in an alternating fashion, or a random copolymer in which the repeating units are randomly arranged.

In this regard, the antibacterial property of the SAN resin is exhibited by the carboxyl group contained in the repeating unit derived from the monomer represented by Chemical Formula 1 as described above. Since the monomer represented by Chemical Formula 1 does not exist as a separate compound in the SAN resin but exists as a repeating unit constituting the main chain, it is not leached over time, and thus the antibacterial property of the SAN resin may be continuously maintained.

Furthermore, the repeating unit derived from the monomer represented by Chemical Formula 1 may be included in the antibacterial SAN resin in an amount of 0.01 mole to 0.7 moles based on 1 mole of the antibacterial SAN resin. When the repeating unit derived from the monomer represented by Chemical Formula 1 is included in an excessively low amount, it is difficult to exhibit a sufficient antibacterial effect, and when the repeating unit derived from the monomer represented by Chemical Formula 1 is included in an excessively high amount, a glass transition temperature of the SAN resin may increase, and thus processability may be lowered.

Specifically, the repeating unit derived from the monomer represented by Chemical Formula 1 may be included in an amount of 0.02 moles or more, 0.03 moles or more, 0.04 moles or more, or 0.05 moles or more, and 0.65 moles or less, 0.6 moles or less, 0.55 moles or less, 0.5 moles or less, or 0.45 moles or less, based on 1 mole of the antibacterial SAN resin.

In addition, in Chemical Formula 1, A may be an aromatic ring having 6 to 60 carbon atoms which is unsubstituted or substituted with one or more substituents selected from alkyl having 1 to 4 carbon atoms, hydroxy and carboxyl groups.

In one embodiment, $R_1$ to $R_3$ may be each independently hydrogen or methyl.

In addition, in one embodiment, A may be an aromatic ring having 6 to 10 carbon atoms which is unsubstituted or substituted with one or more substituents, for example, 1 to 5 substituents selected from alkyl having 1 to 4 carbon atoms, hydroxy and carboxyl groups.

Specifically, A may be a benzene ring which is unsubstituted or substituted with one or more substituents, for example, 1 to 5 substituents selected from alkyl having 1 to 4 carbon atoms, hydroxy and carboxyl groups.

For example, the polymerizable antibacterial monomer may be any one selected from the following compounds:

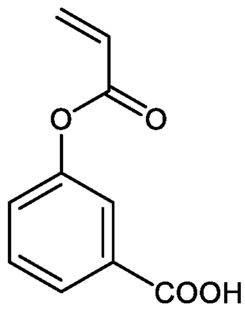 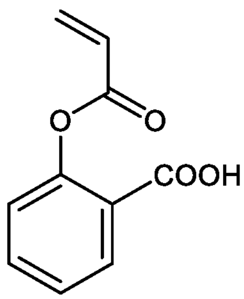 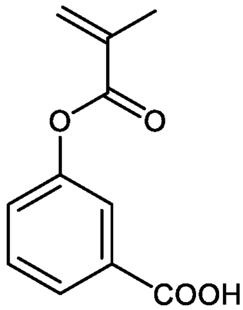 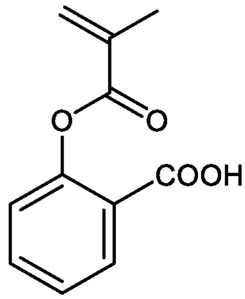.

Meanwhile, the styrene-based monomer may be one or more selected from styrene, α-methylstyrene, β-methylstyrene, p-methylstyrene, p-tert-butylstyrene, o-bromostyrene, o-chlorostyrene, m-bromostyrene, m-chlorostyrene, p-bromostyrene and p-chlorostyrene. The repeating unit derived from such a styrene-based monomer may serve to increase a polymerization conversion rate during polymerization while increasing the heat resistance of the SAN resin.

In addition, the acrylonitrile-based monomer may be one or more selected from acrylonitrile, methacrylonitrile and ethacrylonitrile. The repeating unit derived from such an acrylonitrile-based monomer may serve to increase strength, heat resistance, and crack resistance of the SAN resin.

In this regard, the repeating unit derived from the styrene-based monomer and the repeating unit derived from the acrylonitrile-based monomer may be included in the antibacterial SAN resin at a molar ratio of 5:5 to 9:1. When the molar ratio of the repeating unit derived from the styrene-based monomer and the repeating unit derived from the acrylonitrile-based monomer in the SAN resin is less than 5:5, the repeating unit derived from the acrylonitrile-based monomer is included in an excessively large amount, relative to the repeating unit derived from the styrene-based monomer, and thus a gel polymer not soluble in a solvent may be formed. This gel polymer is very weak to heat, and thus there may be a problem in that it appears as a red or black foreign substance when heated, damaging appearance of a product. Further, when the molar ratio of the repeating unit derived from the styrene-based monomer and the repeating unit derived from the acrylonitrile-based monomer in the SAN resin is more than 9:1, the content of the repeating unit derived from the acrylonitrile-based monomer is excessively small, and thus there may be a problem in that a polymerization conversion rate and a molecular weight are lowered, and the heat resistance may deteriorate due to the excessively high content of the repeating unit derived from the styrene-based monomer.

Specifically, the repeating unit derived from the styrene-based monomer and the repeating unit derived from the acrylonitrile-based monomer may be included in the antibacterial SAN resin at a molar ratio of 5.2:4.8 or more, 5.3:4.7 or more, 5.4:4.6 or more, 5.5:4.5 or more, 5.6:4.4 or more, 5.7:4.3 or more, 5.8:4.2 or more, or 5.9:4.1 or more, and 8:2 or less, 7:3 or less, 6.5:3.5 or less, or 6:4 or less.

Meanwhile, the antibacterial SAN resin may be represented by the following Chemical Formula 2, when styrene is used as the styrene-based monomer, and acrylonitrile is used as the acrylonitrile-based monomer:

[Chemical Formula 2]

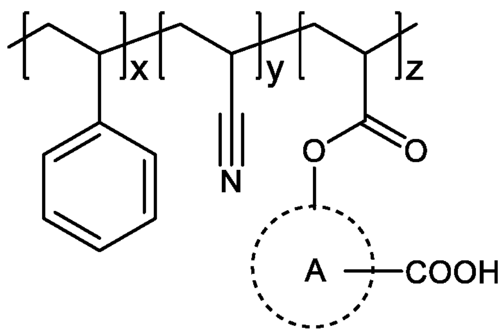

in Chemical Formula 2,

A is the same as defined in Chemical Formula 1,

x+y is a real number of 0.3 to 0.99,

z is a real number of 0.01 to 0.7, and

x+y+z is 1.

In other words, in Chemical Formula 2, x, y and z refer to the number of mole of the repeating unit derived from styrene, the number of mole of the repeating unit derived from acrylonitrile, and the number of mole of the repeating unit derived from the monomer represented by Chemical Formula 1, respectively.

Further, the SAN resin may exhibit antibacterial property against at least one of Gram-negative bacteria and Gram-positive bacteria, as described above. More specifically, the SAN resin may exhibit antibacterial property against one or more kinds of bacteria, categorized as Gram-positive bacteria. Alternatively, the SAN resin may exhibit antibacterial property against one or more kinds of bacteria, categorized as the Gram-negative bacteria. Alternatively, the SAN resin may exhibit antibacterial property against one or more kinds of bacteria, categorized as the Gram-negative bacteria and one or more kinds of bacteria, categorized as the Gram-positive bacteria.

The Gram-positive bacteria collectively refer to bacteria that are stained purple when stained by the Gram staining method. The cell wall of Gram-positive bacteria consists of several layers of peptidoglycan. After staining with a basic dye such as crystal violet, even when the Gram-positive bacteria are treated with ethanol, they are not decolorized and remain colored purple. Bacteria categorized as the Gram-positive bacteria include *Enterococcus faecalis, Staphylococcus aureus, Streptococcus pneumoniae, Enterococcus faecium, Lactobacillus lactis,* etc.

Further, the Gram-negative bacteria collectively refer to bacteria that are stained red when stained by the Gram staining method, and have outer membrane consisting of lipopolysaccharides, lipoproteins, and other complex polymer materials instead of the cell wall having a relatively small amount of peptidoglycan, as compared to the Gram-positive bacteria. Thus, after staining with a basic dye such as crystal violet, even when the Gram-negative bacteria are treated with ethanol, they are decolorized, and when they are counter-stained with a red dye such as safranin, they appear red. Bacteria categorized as the Gram-negative bacteria include *Proteus mirabilis, Escherichia coli, Salmonella typhi, Pseudomonas aeruginosa, Vibrio cholerae,* etc.

Therefore, since the Gram-positive bacteria and Gram-negative bacteria may cause various diseases upon contacting, and may also cause secondary infection in critically ill patients with weak immunity, it is preferable that a single antibacterial agent is used to exhibit antibacterial property against both Gram-positive bacteria and Gram-negative bacteria.

Preferably, the SAN resin may exhibit antibacterial property against both of the Gram-negative bacteria and Gram-positive bacteria. In this regard, the Gram-negative bacteria against which the SAN resin may exhibit the antibacterial property may be *Proteus mirabilis,* or *Escherichia coli,* and the Gram-positive bacteria against which the SAN resin may exhibit the antibacterial property may be *Enterococcus faecalis* or *Staphylococcus aureus,* but are not limited thereto.

Here, the antibacterial property of the SAN resin may be evaluated in accordance with JIS Z 2801 (Measuring antibacterial activity on plastic and nonporous surfaces) or ASTM E2149 (Determining the Antimicrobial Activity of Immobilized Antimicrobial Agents Under Dynamic Contact Conditions).

More specifically, the antibacterial rate of the SAN resin, as measured by the following Equation 1 in accordance with ASTM E2149, may be 38% or more, 50% or more, 60% or more, 70% or more, 80% or more, 90% or more, 95% or more, 96% or more, 97% or more, 98% or more, 98.1 % or more, 99% or more, 99.3% or more, or 99.9% or more, and 100% or less:

[Equation 1]

$$\text{Antibacterial rate}(\%) = [1 - (\text{Number of bacteria in test group}/\text{Number of bacteria in control group})] \times 100$$

The method of measuring the antibacterial rate will be described in more detail in Experimental Example below.

Further, the SAN resin may have a weight average molecular weight of 20,000 g/mol to 100,000 g/mol. When the weight average molecular weight of the SAN resin is less than 20,000 g/mol, it may exist not in the form of polymers but in the form of monomers, and thus it may easily leach. Furthermore, due to the low molecular weight, there is a problem in that it may be absorbed into the human body, and breakage of the resin occurs, and thus there is a difficulty in processability. When the weight average molecular weight of the SAN resin is more than 100,000 g/mol, strength and chemical resistance are reduced, and molding defects may occur during injection molding.

More specifically, the weight average molecular weight (Mw, g/mol) of the SAN resin may be 20,000 or more, 25,000 or more, 25,187 or more, 30,000 or more, 31,468 or more, 40,000 or more, 50,000 or more, or 60,000 or more, and 95,000 or less, 93,000 or less, 91,000 or less, 90,403 or less, 85,000 or less, 80,000 or less, 78,568 or less, or 75,000 or less.

In this regard, the weight average molecular weight (Mw) of the SAN resin may be measured by gel permeation chromatography (GPC) using polystyrene (PS) as a standard for calibration. More specifically, the SAN resin is diluted with a tetrahydrofuran (THF) solvent at a concentration of 2 mg/mL, and then the weight average molecular weight may

be measured at a flow rate of 1.0 mL/min through an RI detector using Agilent Technologies' Agilent 1200 series GPC instrument. The more detailed measurement is performed by referring to Experimental Example below.

Further, the SAN resin may have a glass transition temperature (Tg) of 90°C to 160°C. The SAN resin having a glass transition temperature in the above range may have a good balance between heat resistance and strength. At this time, the glass transition temperature of the SAN resin may be determined using TA Instruments' Differential Scanning Calorimeters (DSC).

Further, the SAN resin may have a bulk density of 0.6 g/cc to 0.7 g/cc. The SAN resin having a bulk density in the above range is advantageous in that its storage and transport are easy. At this time, the bulk density of the SAN resin may be determined as a value obtained by filling a 100 cc cup with the powdery SAN resin and then dividing the weight (g) thereof by 100.

**Method of preparing SAN resin**

Meanwhile, the SAN resin may be prepared by the step of polymerizing the monomer represented by Chemical Formula 1; the styrene-based monomer; and the acrylonitrile-based monomer in the presence of a polymerization initiator at a temperature of 60°C to 90°C for 3 hours to 8 hours. More specifically, the SAN resin may be prepared by polymerizing the three kinds of monomers in the temperature range of 60°C or higher, or 70°C or higher, and 90°C or lower, or 80°C or lower for 3 hours or longer or 3 hours and 30 minutes or longer, and 8 hours or shorter, 7 hours or shorter, 6 hours or shorter, 5 hours or shorter, or 4 hours or shorter.

More specifically, the copolymerizing may be performed by a method such as emulsion polymerization, suspension polymerization, bulk polymerization, etc., and an appropriate polymerization method may be selected according to the end use.

In addition, an azo-based initiator may be used as the polymerization initiator that promotes polymerization stability and polymerization reaction. For example, the azo-based initiator may include azobisisobutyronitrile (AIBN), 2, 2-azobis(2-amidinopropane) dihydrochloride, 2,2-azobis-(N,N-dimethylene)isobutyramidine dihydrochloride, 2-(carbamoylazo)isobutylonitrile, 2,2-azobis[2-(2-imidazolin-2-yl)propane] dihydrochloride, 4,4-azobis-(4-cyanovaleric acid), etc.

The polymerization initiator may be used in an amount of 0.01 part by weight to 5 parts by weight with respect to the total 100 parts by weight of the monomers. When the content of the polymerization initiator is less than 0.01 part by weight, the effect of adding the polymerization initiator may be insignificant. When the content of the polymerization initiator is more than 5 parts by weight, the molecular weight of the SAN resin may be small and the physical properties may be deteriorated. More specifically, the polymerization initiator may be used in an amount of 0.05 parts by weight or more, or 0.1 parts by weight or more, 0.5 parts by weight or more, or 1.2 parts by weight or more, and 4 parts by weight or less, 2 parts by weight or less, or 1.85 or less with respect to the total 100 parts by weight of the monomers.

Further, the monomers and the polymerization initiators may be prepared in the form of a solution, in which they are dissolved in a solvent.

In this regard, as the solvent to be applicable, any solvent may be used without limitations in the constitution as long as it is able to dissolve the above components. For example, one or more selected from water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, N,N-dimethylformamide, and N,N-dimethylacetamide may be used in combination.

In addition, a molecular weight modifier such as a mercaptan compound may be additionally used during polymerization, and an emulsifier such as potassium salts of fatty acids may be used when the polymerization reaction is performed by emulsion polymerization.

Further, the polymerization may be performed, for example, until the polymerization conversion rate reaches 50% or more, more specifically, 50% to 90%. For example, the polymerization may be performed until the polymerization conversion rate reaches 60% or more, 70% or more, or 80% or more, and 90% or less, or 85% or less. When the polymerization is performed within the above-described range of the polymerization conversion rate, the process may be easy and excellent productivity may be exhibited.

In addition, after the polymerization step, the step of extracting and vacuumdrying the polymer is performed to finally obtain the desired SAN resin. In particular, it is possible to improve transparency and heat resistance of the final SAN resin by volatilizing the unreacted monomer and solvent remaining after the polymerization through the vacuum drying process.

## ABS resin composition

Meanwhile, according to still another embodiment, provided is an antibacterial ABS resin composition including the above-described antibacterial SAN resin; and an ABS resin.

The ABS resin may be, for example, a copolymer of an acrylonitrile-based monomer, a conjugated diene monomer, and a vinyl aromatic monomer.

Here, the acrylonitrile-based monomer is the same as described above.

In addition, the conjugated diene monomer may be one or more selected from 1,3-butadiene, 2,3-dimethyl-1,3-butadiene, 2-ethyl-1,3-butadiene, 1,3-pentadiene, and isoprene.

In addition, the vinyl aromatic monomer may be one or more selected from styrene, α-methylstyrene, β-methylstyrene, p-t-butylstyrene, chlorostyrene, vinylbenzoic acid, methyl vinylbenzoate, vinylnaphthalene, chloromethylstyrene, hydroxymethylstyrene, and divinylbenzene.

More specifically, the ABS resin may be a graft copolymer in which a vinyl aromatic monomer and an acrylonitrile-based monomer are grafted onto a rubbery polymer in which a conjugated diene monomer is polymerized. Here, the content of the rubbery polymer is preferably 30% by weight to 75% by weight, based on the total weight of the graft copolymer. Within the above range, not only the rate of grafting is high, but also a molded article finally manufactured may have excellent impact strength and chemical resistance. In addition, in terms of increasing the rate of grafting with the rubbery polymer, the content of the vinyl aromatic monomer is preferably 20% by weight to 65% by weight, based on the total weight of the graft copolymer resin, and the content of the acrylonitrile-based monomer is preferably 5% by weight to 30% by weight, based on the total weight of the graft copolymer resin.

In addition, the ABS resin composition may include 60% by weight to 90% by weight of the antibacterial SAN resin; and 10% by weight to 40% by weight of the ABS resin.

In addition, the ABS resin composition may further include antioxidants such as hindered phenol-based antioxidants, phosphorus-based antioxidants, etc.

Meanwhile, according to still another embodiment, provided is a molded article manufactured by using the above-described ABS resin composition. The molded article may be, for example, one or more selected from automobile interior/exterior materials, home appliance housings, toys, food containers, and medical articles.

Hereinafter, preferred exemplary embodiments are provided for better understanding of the invention. However, the following exemplary embodiments are only for illustrating the invention, and the invention is not limited thereto.

## Preparation Example 1: Preparation of polymerizable antibacterial monomer 1-1 (3-(acryloyloxy)benzoic acid; A-BA)

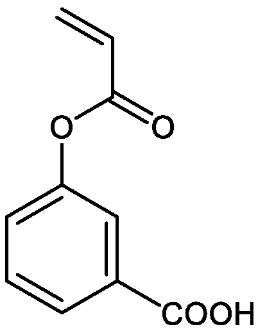

A solution, in which 26.67 g of 3-hydroxybenzoic acid and 15.63 g of NaOH were dissolved in 100 mL of water, was put in a 250 mL round bottom flask, and a solution, in which 19.39 g of acryloyl chloride was dissolved in 50 mL of 1,4-dioxane, was added thereto. At this time, the addition was carried out by slowly adding dropwise using a dropping funnel at 0°C. When the addition of the 1,4-dioxane solution, in which acryloyl chloride was dissolved, was completed, the reaction was carried out under stirring at room temperature for 4 hours, and hydrochloric acid was added until pH of the reaction-completed solution reached 2 to 3, and as a result, a liquid product was obtained. The obtained liquid product was dissolved in a methylene chloride (MC) solvent, and then water was added to perform extraction. Thereafter, recrystallization was carried out with water to obtain the title compound, polymerizable antibacterial monomer 1-1 in a solid phase. Meanwhile, $^1H$ NMR spectrum of the obtained polymerizable antibacterial monomer 1-1 is shown in FIG. 1.

$MS[M+H]^+ = 193$

$^1H$ NMR (500 MHz, DMSO-$d_6$, δ [ppm]): 6.1 (dd, 1H, $CH_2$=CH), 6.3 (dd, 1H, $CH_2$=CH), 6.5 (dd, 1H, $CH_2$=CH), 7.4 (d,

1H, Ar-H), 7.5 (d, 1H, Ar-H), 7.6 (d, 1H, Ar-H), 7.8 (d, 1H, Ar-H), 13.1 (s, 1H, COOH).

**Preparation Example 2: Preparation of polymerizable antibacterial monomer 1-2 (2-(acryloyloxy)benzoic acid; 2-A-BA)**

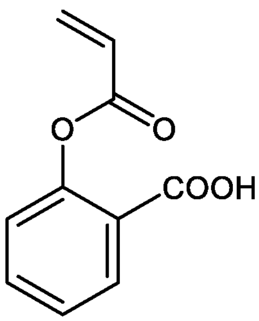

A solution, in which 26.67 g (0.2 mol) of salicylic acid and 22.4 g (0.4 mol) of KOH were dissolved in 100 mL of water, was put in a 250 mL round bottom flask, and a solution, in which 19.39 g of acryloyl chloride was dissolved in 50 mL of 1,4-dioxane, was added thereto. At this time, the addition was carried out by slowly adding dropwise using a dropping funnel at 0°C. When the addition of the 1,4-dioxane solution, in which acryloyl chloride was dissolved, was completed, the reaction was carried out under stirring at 40°C for 8 hours, and hydrochloric acid was added until pH of the reaction-completed solution reached 2 to 3, and as a result, a liquid product was obtained. The obtained liquid product was dissolved in a diethyl ether solvent, and then water was added to perform extraction. Thereafter, recrystallization was carried out with water to obtain the title compound, polymerizable antibacterial monomer 1-2 with high purity in a solid phase.

MS$[M+H]^+$ = 193

$^1$H NMR (500 MHz, DMSO-$d_6$, $\delta$ [ppm]): 5.7 (dd, 1H, $CH_2$=CH), 6.1 (dd, 1H, $CH_2$=CH), 6.2 (dd, 1H, $CH_2$=CH), 7.8 (d, 1H, Ar-H), 7.9 (d, 1H, Ar-H), 7.96 (d, 1H, Ar-H), 8.2 (d, 1H, Ar-H), 12.0 (s, 1H, COOH).

**Example - Preparation of SAN resin**

**Example 1**

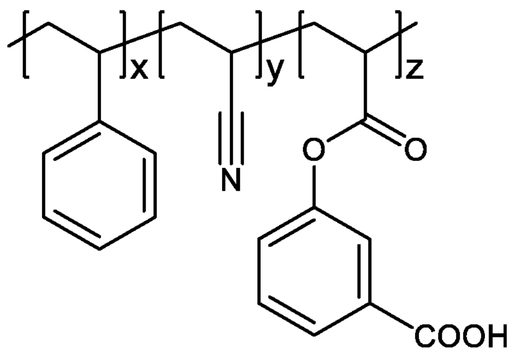

4.878 g of styrene, 1.657 g of acrylonitrile, 15 g of the polymerizable antibacterial monomer 1-1 prepared in Preparation Example 1, and 0.26 g of azobisisobutyronitrile (AIBN) as a polymerization initiator were dissolved in 35.89 mL of a solvent N,N-dimethylformamide (DMF), and then polymerization was carried out for 4 hours using a magnetic bar at 80 °C under air conditions. The reaction was terminated when a polymerization conversion rate was 80%. Thereafter, the reaction-completed solution was cooled to room temperature, precipitated in a sufficient amount of water, and then vacuum-dried to obtain a copolymer SAN-co-(A-BA) resin in the form of a solid powder.

A weight average molecular weight of the SAN-co-(A-BA) resin thus prepared was 90,403 g/mol, and a molar

ratio (x:y:z) of the repeating unit derived from styrene, the repeating unit derived from acrylonitrile, and the repeating unit derived from the polymerizable antibacterial monomer was 0.3:0.2:0.5.

At this time, the weight average molecular weight of the SAN-co-(A-BA) resin was determined by dissolving the prepared copolymer in tetrahydrofuran (THF) by using GPC (device name: Agilent 1200 series GPC, manufactured by Agilent Technologies). Specifically, the sample preparation method for measuring the weight average molecular weight and measurement conditions are as follows.

(1) Sample preparation

1000 mL of THF (stabilized with BHT) was filtered through a solvent clarification system to prepare a mobile phase A. Then, the sample to be measured was diluted in THF (stabilized with BHT) to a concentration of 2 mg/mL, and dissolved at a temperature of 50°C for 6 hours, and then the solution was filtered through a PVDF filter (pore size: 0.45 μm), and prepared as a sample solution.

(2) GPC measurement conditions

- Stationary phase: 3x Agilent PLgel MIXED-C, 7.5 x 300 mm, 5 μm
- Mobile phase A: THF (stabilized with BHT) = 100 (w/v, %)
- Flow rate: 1.0 mL/min
- Stationary phase temperature: 40°C
- Feeding amount: 100 μl (0.45 μm filter)
- Analysis time: 35 minutes
- Standard: polystyrene

**Example 2**

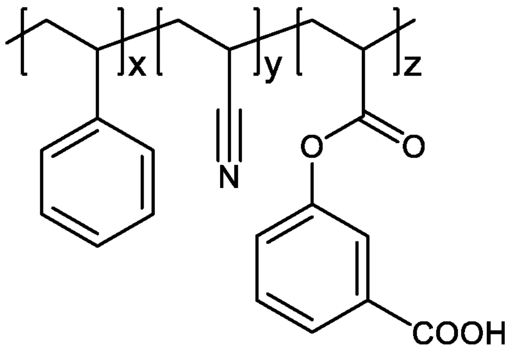

61.36 g of styrene, 20.84 g of acrylonitrile, 10 g of the polymerizable antibacterial monomer 1-1 prepared in Preparation Example 1, and 1.70 g of azobisisobutyronitrile (AIBN) as a polymerization initiator were dissolved in 153.66 mL of a solvent N,N-dimethylformamide (DMF), and then polymerization was carried out for 4 hours using a magnetic bar at 80 °C under air conditions. The reaction was terminated when a polymerization conversion rate was 80%. Thereafter, the reaction-completed solution was cooled to room temperature, precipitated in a sufficient amount of water, and then vacuum-dried to obtain a copolymer SAN-co-(A-BA) resin in the form of a solid powder.

At this time, a weight average molecular weight of the SAN-co-(A-BA) resin was 31,468 g/mol, as measured according to the method described in Example 1, and a molar ratio (x:y:z) of the repeating unit derived from styrene, the repeating unit derived from acrylonitrile, and the repeating unit derived from the polymerizable antibacterial monomer was 0.57:0.38:0.05.

**Example 3**

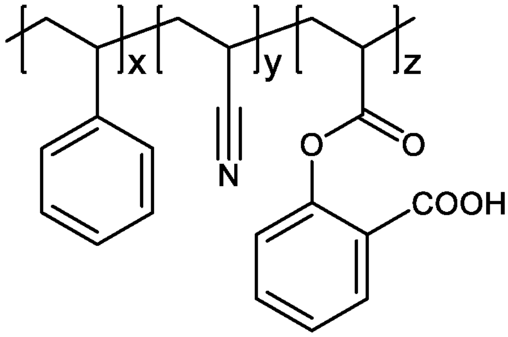

4.878 g of styrene, 1.657 g of acrylonitrile, 15 g of the polymerizable antibacterial monomer 1-2 prepared in Preparation Example 2, and 0.26 g of azobisisobutyronitrile (AIBN) as a polymerization initiator were dissolved in 35.89 mL of a solvent N,N-dimethylformamide (DMF), and then polymerization was carried out for 4 hours using a magnetic bar at 80 °C under air conditions. The reaction was terminated when a polymerization conversion rate was 80%. Thereafter, the reaction-completed solution was cooled to room temperature, precipitated in a sufficient amount of water, and then vacuum-dried to obtain a copolymer SAN-co-(2-A-BA) resin in the form of a solid powder.
A weight average molecular weight of the SAN-co-(2-A-BA) resin thus prepared was 78,568 g/mol, as measured according to the method described in Example 1, and a molar ratio (x:y:z) of the repeating unit derived from styrene, the repeating unit derived from acrylonitrile, and the repeating unit derived from the polymerizable antibacterial monomer was 0.32:0.23:0.45.

**Example 4**

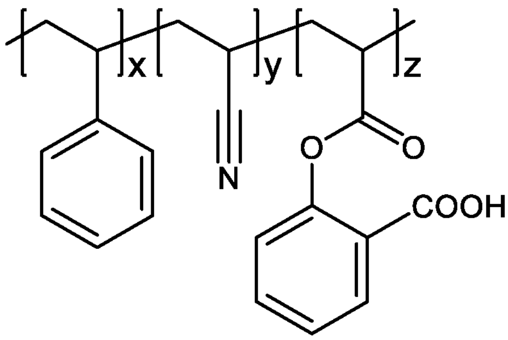

61.36 g of styrene, 20.84 g of acrylonitrile, 10 g of the polymerizable antibacterial monomer 1-2 prepared in Preparation Example 2, and 1.70 g of azobisisobutyronitrile (AIBN) as a polymerization initiator were dissolved in 153.66 mL of a solvent N,N-dimethylformamide (DMF), and then polymerization was carried out for 4 hours using a magnetic bar at 80 °C under air conditions. The reaction was terminated when a polymerization conversion rate was 80%. Thereafter, the reaction-completed solution was cooled to room temperature, precipitated in a sufficient amount of water, and then vacuum-dried to obtain a copolymer SAN-co-(2-A-BA) resin in the form of a solid powder.
A weight average molecular weight of the SAN-co-(2-A-BA) resin thus prepared was 25,187 g/mol, as measured according to the method described in Example 1, and a molar ratio (x:y:z) of the repeating unit derived from styrene, the repeating unit derived from acrylonitrile, and the repeating unit derived from the polymerizable antibacterial monomer was 0.58:0.39:0.03.

**Comparative Example 1**

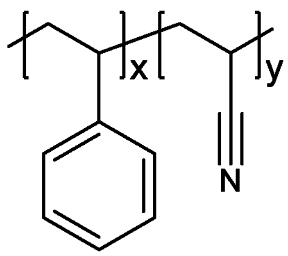

6 g of styrene, 2.038 g of acrylonitrile, and 0.158 g of azobisisobutyronitrile (AIBN) as a polymerization initiator were dissolved in 10.047 mL of a solvent N,N-dimethylformamide (DMF), and then polymerization was carried out for 4 hours using a magnetic bar at 80 °C under air conditions. The reaction was terminated when a polymerization conversion rate was 80%. Thereafter, the reaction-completed solution was cooled to room temperature, precipitated in a sufficient amount of water, and then vacuum-dried to obtain a copolymer SAN resin in the form of a solid powder.

A weight average molecular weight of the SAN resin thus prepared was 37,266 g/mol, as measured according to the method described in Example 1, and a molar ratio (x:y) of the repeating unit derived from styrene and the repeating unit derived from acrylonitrile was 0.6:0.4.

**Comparative Example 2**

For comparison of antibacterial properties with those of the SAN resins prepared in Examples, ABS HF380 (manufactured by LG Chem) which is a commercial ABS resin was used as Comparative Example 2.

**Comparative Example 3**

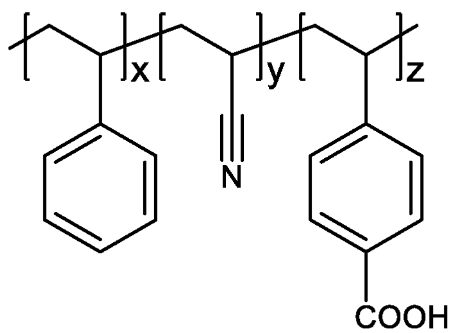

2.109 g of styrene, 0.716 g of acrylonitrile, 5 g of 4-vinylbenzoic acid, and 0.11 g of azobisisobutyronitrile (AIBN) as a polymerization initiator were dissolved in 40 mL of a solvent N,N-dimethylformamide (DMF), and then polymerization was carried out for 4 hours using a magnetic bar at 80 °C under air conditions. The reaction was terminated when a polymerization conversion rate was 80%. Thereafter, the reaction-completed solution was cooled to room temperature, precipitated in a sufficient amount of water, and then vacuum-dried to obtain a copolymer SAN-co-(4-VBA) resin in the form of a solid powder.

A weight average molecular weight of the SAN-co-(4-VBA) resin thus prepared was 147,822 g/mol, as measured according to the method described in Example 1, and a molar ratio (x:y:z) of the repeating unit derived from styrene, the repeating unit derived from acrylonitrile, and the repeating unit derived from the polymerizable antibacterial monomer was 0.3:0.2:0.5.

**Experimental Example 1**

The antibacterial properties of the SAN resins prepared in Examples and Comparative Examples against *E.coli* (ATCC 25922) were measured by the following method in accordance with ASTM E2149(Shake Flask Method), respectively.

In detail, the bacteria were brought into contact with a sample to be tested for a predetermined period of time, recovered and cultured in a medium. Then, the antibacterial rate was calculated by comparing the colony forming unit

(CFU) with that of a control (SAN resin of Comparative Example 1). Preparation methods of the medium and test group required for the antibacterial test and a detailed method of the antibacterial test are as follows.

[Preparation of medium]

With regard to a liquid medium, 8 g of NB broth and 1 L of distilled water were placed in a 2 L container and sufficiently dissolved, and then sterilized in an autoclave at (120±2)°C with a vapor pressure of 103 kPA for 20 minutes.
With regard to a solid medium, 8 g of NB broth, 25 g of agar powder, and 1 L of distilled water were placed in a 2 L container and dissolved by stirring with a spoon or by heating. Since the agar powder on the wall is not dissolved even at high temperatures during the sterilization process, it was dissolved by shaking. Further, it was sterilized under the same conditions as the liquid medium. NB broth solidifies at 40 °C, and thus when the temperature decreased to 60 °C after sterilization, each 25 mL of the solution was poured into a 90 mm diameter Petri dish and solidified.

[Culture of test group]

① A portion of the own bacterial strain was inoculated into 10 mL of the liquid medium using a loop, followed by suspension culture at (37±1)°C for 18 hours to 24 hours using a shaking incubator.

② The bacterial strain cultured in the liquid medium were centrifuged at 2000 rpm for 3 minutes to separate only the bacteria from the medium, which were then diluted with 1X PBS such that an OD value (optical density) was 1 at a wavelength of 600 nm. *E.coli* showed CFU value of $2*10^8$ CFU/mL at OD 600 nm= 0.45.

[Measurement of antibacterial rate]

① 0.5 g of the powder or liquid antibacterial sample and 25 mL of $10^5$ CFU concentration of bacteria (25 mL of 1X PBS, 250 uL of bacteria with OD 600 nm =0.45) were added to a 50 mL conical tube. As a control specimen, the remainder (bacteria, PBS), except for the antibacterial sample, was prepared in a 50 mL conical tube.

② The prepared samples were subjected to suspension-culture at (37±1)°C for 18 hours to 24 hours using a shaking incubator.

③ After the bacterial culture was completed, the samples were diluted 1x, 10x, and 100x, and each 100 ul thereof was inoculated on the agar solid medium, and then spread thereon using a spreader or glass beads until absorbed into the medium.

④ The solid medium was subjected to stationary culture at (37±1)°C for 24 hours to 48 hours.

⑤ The colonies on the Petri dish having 30 to 300 colonies among the 1-fold, 10-fold, and 100-fold diluted samples were counted and recorded. Then, the antibacterial rate (%) was obtained by calculating how many percent was reduced in the number of CFUs of the sample, as compared to that of the control group, according to Equation 1 below, and the average value was obtained after the experiment was performed in triplicate, and shown in Table 1 below.

[Equation 1]

$$\text{Antibacterial rate(\%)} = [1- (\text{Number of bacteria in test group}/\text{Number of bacteria in control group})] \times 100$$

in Equation 1,

the number of bacteria in the test group represents the number of bacteria in the antibacterial test of each resin of Examples and Comparative Examples, and

the number of bacteria in the control group represents the number of bacteria in the antibacterial test of the resin of Comparative Example 1.

[Table 1]

| | Kind of resin | Antibacterial property against *E.coli* | | |
|---|---|---|---|---|
| | | CFU/mL SUE | Log CFU/mL SUE | Antibacterial rate (%) |
| Example 1 | SAN-co-(A-BA) | 2.13E+05 | 5.33 | 99.94 |
| Example 2 | SAN-co-(A-BA) | 2.57E+06 | 6.41 | 99.30 |
| Example 3 | SAN-co-(2-A-BA) | 3.39E+06 | 6.53 | 99.07 |
| Example 4 | SAN-co-(2-A-BA) | 6.61E+06 | 6.82 | 98.18 |
| Comparative Example 1 | SAN | 3.7E+08 | 8.56 | 0 |
| Comparative Example 2 | ABS | 3.1E+08 | 8.49 | 0 |
| Comparative Example 3 | SAN-co-(4-VBA) | 2.3E+08 | 8.36 | 37.03 |

Referring to Table 1, the SAN-co-(A-BA) and SAN-co-(2-A-BA) resins of Examples were found to exhibit superior antibacterial properties against *E.coli* which is one of Gram-negative bacteria, as compared to the resin of Comparative Example without the repeating unit derived from the polymerizable antibacterial monomer represented by Chemical Formula 1.

In particular, the SAN-co-(4-VBA) resin of Comparative Example 3, which was prepared by using 4-vinyl benzoic acid, instead of the polymerizable antibacterial monomer prepared in Preparation Examples 1 and 2, was found to exhibit a remarkably low antibacterial property, as compared to the resins of Examples.

Accordingly, when the SAN resin further includes the repeating unit derived from the polymerizable antibacterial monomer represented by Chemical Formula 1, in addition to the repeating unit derived from the styrene-based monomer and the repeating unit derived from the acrylonitrile-based monomer, it was found to exhibit superior antibacterial property, as compared to a resin including a repeating unit derived from a monomer having a carboxyl group, such as 4-vinyl benzoic acid.

## Claims

1. An antibacterial SAN resin comprising a repeating unit derived from a monomer represented by the following Chemical Formula 1; a repeating unit derived from a styrene-based monomer; and a repeating unit derived from an acrylonitrile-based monomer:

[Chemical Formula 1]

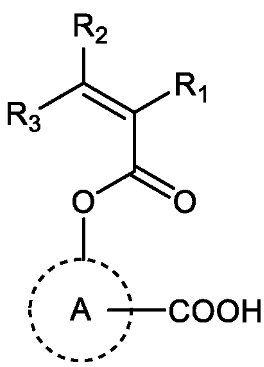

in Chemical Formula 1,

$R_1$ to $R_3$ are each independently hydrogen, or alkyl having 1 to 4 carbon atoms, and

A is an aromatic ring having 6 to 60 carbon atoms which is unsubstituted or substituted with one or more substituents selected from alkyl having 1 to 10 carbon atoms, alkoxy having 1 to 10 carbon atoms, deuterium, halogen, a hydroxy group, and a carboxyl group.

**2.** The antibacterial SAN resin of claim 1,
wherein the repeating unit derived from the monomer represented by Chemical Formula 1 is included in an amount of 0.01 mole to 0.7 moles, based on 1 mole of the antibacterial SAN resin.

**3.** The antibacterial SAN resin of claim 1,

wherein in the Chemical Formula 1,
A is a benzene ring which is unsubstituted or substituted with one or more substituents selected from alkyl having 1 to 4 carbon atoms, hydroxy and carboxyl groups.

**4.** The antibacterial SAN resin of claim 1,
wherein the monomer represented by Chemical Formula 1 is any one selected from the following compounds:

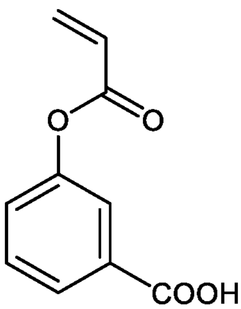 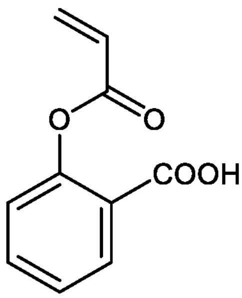 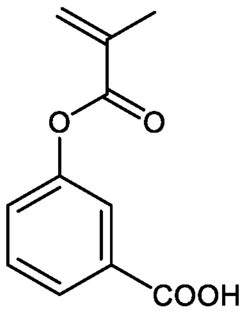 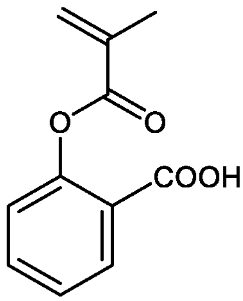 .

**5.** The antibacterial SAN resin of claim 1,
wherein the styrene-based monomer is one or more selected from styrene, α-methylstyrene, β-methylstyrene, p-methylstyrene, p-tert-butylstyrene, o-bromostyrene, o-chlorostyrene, m-bromostyrene, m-chlorostyrene, p-bromostyrene and p-chlorostyrene.

**6.** The antibacterial SAN resin of claim 1,
wherein the acrylonitrile-based monomer is one or more selected from acrylonitrile, methacrylonitrile, and ethacrylonitrile.

**7.** The antibacterial SAN resin of claim 1,
wherein the repeating unit derived from the styrene-based monomer and the repeating unit derived from the acrylonitrile-based monomer are included at a molar ratio of 5:5 to 9:1.

**8.** The antibacterial SAN resin of claim 1,
wherein the antibacterial SAN resin exhibits an antibacterial property against one or more of Gram-negative bacterium and Gram-positive bacterium.

**9.** The antibacterial SAN resin of claim 8,

wherein the Gram-negative bacterium is *Proteus mirabilis* or *Escherichia coli,* and
the Gram-positive bacterium is *Enterococcus faecalis* or *Staphylococcus aureus.*

**10.** The antibacterial SAN resin of claim 1,
wherein the antibacterial SAN resin has a weight average molecular weight of 20,000 g/mol to 100,000 g/mol.

**11.** A method of preparing an antibacterial SAN resin, the method comprising the step of polymerizing a monomer represented by the following Chemical Formula 1; a styrene-based monomer; and an acrylonitrile-based monomer in the presence of a polymerization initiator at a temperature of 60°C to 90°C for 3 hours to 8 hours:

[Chemical Formula 1]

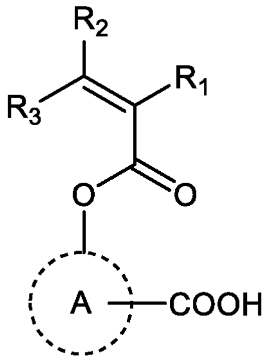

in Chemical Formula 1,

$R_1$ to $R_3$ are each independently hydrogen, or alkyl having 1 to 4 carbon atoms, and
A is an aromatic ring having 6 to 60 carbon atoms which is unsubstituted or substituted with one or more substituents selected from alkyl having 1 to 10 carbon atoms, alkoxy having 1 to 10 carbon atoms, deuterium, halogen, a hydroxy group, and a carboxyl group.

**12.** The method of claim 11,
wherein the polymerizing is carried out until a polymerization conversion rate reaches 50% to 90%.

**13.** An antibacterial ABS resin composition comprising the antibacterial SAN resin of any one of claims 1 to 10; and an ABS resin.

【FIG. 1】

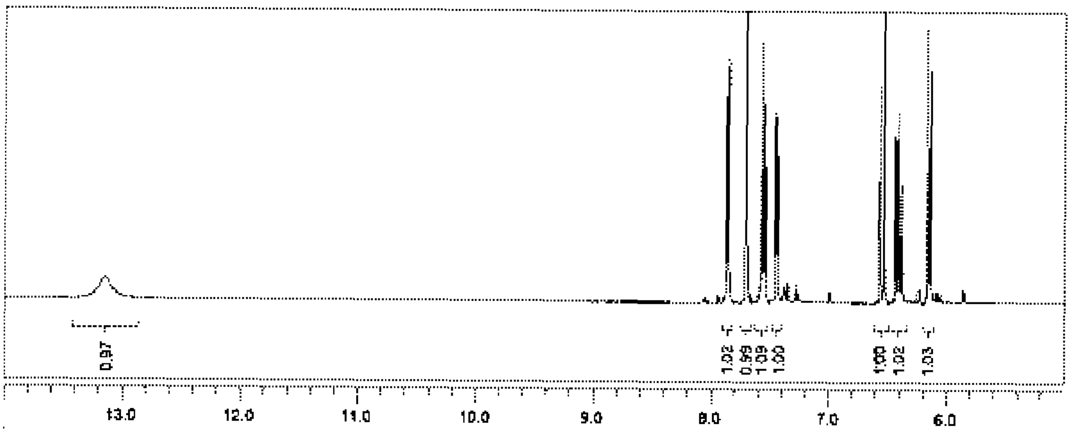

**INTERNATIONAL SEARCH REPORT**

International application No. **PCT/KR2022/009387**

**A. CLASSIFICATION OF SUBJECT MATTER**

**C08F 212/08**(2006.01)i; **C08F 220/30**(2006.01)i; **C08F 220/44**(2006.01)i; **C08L 25/12**(2006.01)i; **C08L 55/02**(2006.01)i

According to International Patent Classification (IPC) or to both national classification and IPC

**B. FIELDS SEARCHED**

Minimum documentation searched (classification system followed by classification symbols)

C08F 212/08(2006.01); C07D 403/10(2006.01); C08F 2/44(2006.01); C08K 3/40(2006.01); C08L 51/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 항균활성(antimicrobial activity), SAN 수지(SAN (styrene-acrylonitrile) resin), ABS 수지(ABS (acrylonitrile-butadiene-styrene) resin), 공중합체(copolymer), 벤조산(benzoic acid), 카르복실기(carboxyl group)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0078902 A (LOTTE ADVANCED MATERIALS CO., LTD.) 10 July 2018 (2018-07-10)<br>See claims 1, 2, 5, 7 and 8; and paragraphs [0001], [0037], [0038], [0041], [0042], [0045], [0063], [0069], [0077], [0083] and [0101]. | 1-13 |
| Y | BORTNOWSKA-BARELA, B. et al. Bioactive emulsions of ocarboxyphenyl methacrylate copolymers. Acta polymerica. 1987, vol. 38, no. 12, pp. 652-654.<br>See abstract; 2.3. Copolymerization of o-carboxyphenyl methacrylate section and 3. Results and discussion section; and tables 1-3. | 1-13 |
| A | JP 2004-067753 A (TORAY IND. INC.) 04 March 2004 (2004-03-04)<br>See entire document. | 1-13 |
| A | RASULZADEH, N. Sh. et al. The research of antibacterial properties of methyl methacrylate and methacryloyl salicylate copolymers. Azerbaijan chemical journal. 2017, vol. 3, pp. 17-19.<br>See entire document. | 1-13 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2022** | **12 October 2022** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2019)

**INTERNATIONAL SEARCH REPORT**

International application No.
**PCT/KR2022/009387**

**C. DOCUMENTS CONSIDERED TO BE RELEVANT**

| Category* | Citation of document, with indication, where appropriate, of the relevant passages | Relevant to claim No. |
|---|---|---|
| A | KR 10-0536551 B1 (MICRO SCIENCE TECH CO., LTD.) 14 December 2005 (2005-12-14)<br>See entire document. | 1-13 |

Form PCT/ISA/210 (second sheet) (July 2019)

**INTERNATIONAL SEARCH REPORT**
**Information on patent family members**

International application No.
**PCT/KR2022/009387**

| Patent document cited in search report | Publication date (day/month/year) | Patent family member(s) | Publication date (day/month/year) |
|---|---|---|---|
| KR 10-2018-0078902 A | 10 July 2018 | KR 10-1900164 B1 | 20 September 2018 |
| | | WO 2018-124595 A1 | 05 July 2018 |
| JP 2004-067753 A | 04 March 2004 | None | |
| KR 10-0536551 B1 | 14 December 2005 | AU 2003-206229 A1 | 02 September 2003 |
| | | KR 10-2003-0066424 A | 09 August 2003 |
| | | US 2005-0176905 A1 | 11 August 2005 |
| | | US 2008-0188655 A1 | 07 August 2008 |
| | | US 7361719 B2 | 22 April 2008 |
| | | US 7777033 B2 | 17 August 2010 |
| | | WO 03-064412 A1 | 07 August 2003 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210098134
- KR 1020220079972